(19) Europäisches Patentamt
European Patent Office
Office européen des brevets

(11) EP 2 496 588 B1

(12) # EUROPÄISCHE PATENTSCHRIFT

(45) Veröffentlichungstag und Bekanntmachung des Hinweises auf die Patenterteilung:
**11.01.2017 Patentblatt 2017/02**

(21) Anmeldenummer: **10771477.6**

(22) Anmeldetag: **02.11.2010**

(51) Int Cl.:
***C07F 9/141*** (2006.01) ***C07F 9/201*** (2006.01)
***C08G 18/02*** (2006.01)

(86) Internationale Anmeldenummer:
**PCT/EP2010/066588**

(87) Internationale Veröffentlichungsnummer:
**WO 2011/054792 (12.05.2011 Gazette 2011/19)**

(54) **URETHANACRYLATE MIT HOHEM BRECHUNGSINDEX UND REDUZIERTER DOPPELBINDUNGSDICHTE**

Urethaneacrylate with high refraction index and reduced double-bond density

Uréthane-acrylates dotés d'un indice de rupture et d'une épaisseur à double liaison réduite

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2009 EP 09013772**

(43) Veröffentlichungstag der Anmeldung:
**12.09.2012 Patentblatt 2012/37**

(73) Patentinhaber: **Covestro Deutschland AG**
**51373 Leverkusen (DE)**

(72) Erfinder:
- **RÖLLE, Thomas**
**51381 Leverkusen (DE)**
- **BRUDER, Friedrich-Karl**
**47802 Krefeld (DE)**
- **FÄCKE, Thomas**
**51375 Leverkusen (DE)**
- **WEISER, Marc-Stephan**
**51379 Leverkusen (DE)**
- **HÖNEL, Dennis**
**53909 Zülpich-Wichterich (DE)**

(74) Vertreter: **Levpat**
**c/o Covestro AG**
**Gebäude 4825**
**51365 Leverkusen (DE)**

(56) Entgegenhaltungen:
**EP-A1- 1 460 478**
**WO-A1-2005/093516**
**WO-A1-2005/114331**
**WO-A1-2008/125199**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 496 588 B1

## Beschreibung

Die Erfindung betrifft neue speziell-substituierte Urethanacrylate auf Basis von Tris(p-isocyanatophenyl)thiophosphat mit hohem Brechungsindex und reduzierter Doppelbindungsdichte und ein Verfahren zu deren Herstellung. Daneben sind eine Photopolymer-Formulierung umfassend die Urethanacrylate und die Verwendung der Photopolymer-Formulierung Gegenstände der Erfindung.

Für die Verwendungen von Photopolymer-Formulierungen in den unten beschriebenen Anwendungsfeldern spielt die durch die holographische Belichtung im Photopolymer erzeugte Brechungsindexmodulation $\Delta n$ die entscheidende Rolle. Bei der holographischen Belichtung wird das Interferenzfeld aus Signal- und Referenzlichtstrahl (im einfachsten Fall das zweier ebenen Wellen) durch die lokale Photopolymerisation von z.B. hochbrechenden Acrylaten an Orten hoher Intensität im Interferenzfeld in ein Brechungsindexgitter abgebildet. Das Brechungsindexgitter im Photopolymeren (das Hologramm) enthält alle Information des Signallichtstrahls. Durch Beleuchtung des Hologramms nur mit dem Referenzlichtstrahl kann dann das Signal wieder rekonstruiert werden. Die Stärke des so rekonstruierten Signals im Verhältnis zur Stärke des eingestrahlten Referenzlichts wird Beugungseffizienz genannt, im Folgenden DE wie Diffraction Efficiency.

Im einfachsten Fall eines Hologramms, das aus der Überlagerung zweier ebener Wellen entsteht, ergibt sich die DE aus dem Quotienten der Intensität des bei der Rekonstruktion abgebeugten Lichtes und der Summe der Intensitäten aus eingestrahltem Referenzlicht und abgebeugtem Licht. Je höher die DE desto effizienter ist ein Hologramm in Bezug auf die notwendige Lichtmenge des Referenzlichtes, die notwendig ist, um das Signal mit einer festen Helligkeit sichtbar zu machen.

Hochbrechende Acrylate sind in der Lage, Brechungsindexgitter mit hoher Amplitude zwischen Bereichen mit niedrigstem Brechungsindex und Bereichen mit höchstem Brechungsindex zu erzeugen und damit in Photopolymer-Formulierungen Hologramme mit hohem DE und hohem $\Delta n$ zu ermöglichen. Dabei ist zu beachten das DE vom Produkt aus $\Delta n$ und der Photopolymerschichtdicke d abhängt. Je größer das Produkt desto größer die mögliche DE (für Reflexionshologramme).

Die Breite des Winkelbereiches, bei dem das Hologramm z.B. bei monochromatischer Beleuchtung sichtbar wird (rekonstruiert), hängt nur von der Schichtdicke d ab. Bei Beleuchtung der Hologramms mit z.B. weißem Licht, hängt die Breite des spektralen Bereiches der zur Rekonstruktion des Hologramms beitragen kann ebenfalls nur von der Schichtdicke d ab. Dabei gilt je kleiner d desto größer die jeweiligen Akzeptanzbreiten.

Will man helle und leicht sichtbare Hologramme herstellen, ist ein hohes $\Delta n\cdot$ und eine geringe Dicke d anzustreben und zwar so das DE möglichst groß wird. Das heißt je höher $\Delta n$ wird, desto mehr

Freiraum zur Gestaltung heller Hologramme durch Anpassen von d und ohne Verlust an DE erhält man. Daher kommt der Optimierung von $\Delta n$ bei der Optimierung von Photopolymerformulierungen eine herausragende Bedeutung zu.

In der WO 2008/125229 A1 sind Photopolymer-Formulierungen, die zur Herstellung von Holgrammen geeignet sind, beschrieben. Diese umfassen Polyurethan-basierte Matrixpolymere, Schreibmomomere auf Acrylbasis sowie Photoinitiatoren. Im ausgehärtetem Zustand sind in der Polyurethanmatrix die Schreibmonomere und die Photoinitiatoren räumlich verteilt eingebettet. Aus der WO-Schrift ist ebenfalls bekannt Dibutylphthalat, einen klassischen Weichmacher für technische Kunststoffe, der Photopolymer-Formulierung hinzuzufügen.

Die WO 2008/125199 A1 beschreibt Schreibmonomere auf Tris(p-isocyanatophenyl)thiophosphat-Basis, allerdings tragen diese verschiedene Alkoholreste. Die mit diesen Schreibmonomeren resultierenden Photopolymer-Formulierungen führen zu keinen zufriedenstellenden Hologrammen.

Die mit Hilfe der bekannten Photopolymer-Formulierung erhältlichen Hologramme weisen eine unzureichende Farbtreue oder Winkeltreue auf, d.h. die Farben oder Winkel unter denen die Hologramme geschrieben wurden, werden bei der Rekonstruktion der Hologramme nicht in der gewünschten Weise d.h. nur unzureichend nah an den Aufnahmebedingungen des Hologramms wiedergegeben.

Im unten stehenden Abschnitt "Messung der holographischen Eigenschaften DE und $\Delta n$ der holographischen Medien mittels Zweistrahlinterferenz in Reflexionsanordnung" wird dargelegt, dass aufgrund von auftretendem Schrumpf und wegen Änderungen des mittleren Brechungsindexes bei der Photopolymerisation der Schreibmonomere die Winkeldifferenz zwischen Aufnahme und Rekonstruktionswinkeln korrigiert werden muss. Die Änderung des Brechungsindex resultiert dabei hauptsächlich aus der Änderung der Dichte des Materials beim Übergang vom Monomer zum Polymer. In visuellen Hologrammen führt Schrumpf zu unzureichender Farbtreue, d.h. die ursprüngliche Wellenlänge, die zur holographischen Aufnahme des Objekts verwendet wurde, wird bei der Rekonstruktion unter gleicher Geometrie kurzwellig verschoben. In holographisch optischen Elementen, im einfachsten Fall ein Gitter, führt Schrumpf zudem zu unzureichender Winkeltreue.

Insbesondere wenn zur holographischen Aufnahme einfacher Reflexionsgitter die identische Wellenlänge benutzt wird, ist der Peak Shift ($\alpha_0$' - $\alpha_0$), zwischen dem Rekonstruktionswinkel mit maximaler Beugungseffizienz $\alpha_0$' und dem Aufnahmewinkel $\alpha_0$ zu berücksichtigen. Um dennoch hohe Farbtreue und hoher Winkeltreue zwischen aufgenommenen und wiedergegebenen Hologramm zu erhalten, muss daher ein gewisser Aufwand für Winkel- bzw. Wellenlängenkorrektur betrieben werden oder andere optische Maßnahmen zur Kompensation müssen durchgeführt werden. Aufgabe der vorliegenden Erfindung war es daher ein Schreibmonomer auf Acrylat-Basis für eine Photopolymer-Formulierung bereit zu stellen, mit deren Hilfe sich Holgramme mit einer verbesserten Farbtreue und Winkeltreue herstellen lassen, die insbesondere einen reduzierten Peak Shift bei vergleichbarer Helligkeit aufweisen.

Diese Aufgabe wird durch ein Urethanacrylat der Formel (I)

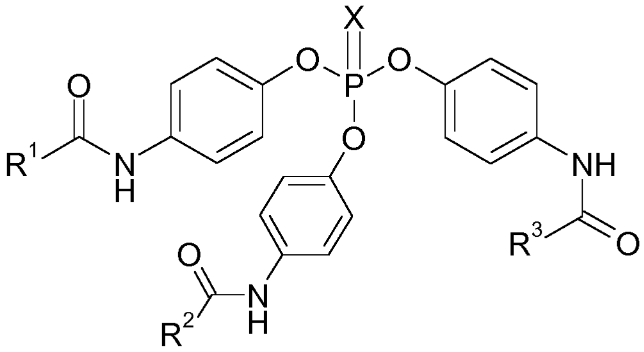

(I)

in der X Sauerstoff oder Schwefel ist und $R^1$, $R^2$, $R^3$ unabhängig voneinander jeweils ein olefinisch ungesättigter organischer Rest oder ein aliphatischer Alkohol sind, wobei wenigstens einer der Reste $R^1$, $R^2$, $R^3$ ein olefinisch ungesättigter organischer Rest und wenigstens einer der Reste $R^1$, $R^2$, $R^3$ ein aliphatischer Alkohol ist, dadurch gekennzeichnet, dass die aliphatischen Alkohole Trifluorethanol und/oder 1,1,1,3,3,3-Hexafluorpropan-2-ol sind, gelöst.

So wurde gefunden, dass Photopolymer-Formulierung Hologramme mit hoher Farbtreue und hoher Winkeltreue hergestellt werden können wenn das erfindungsgemäße Urethanacrylat als Schreibmonomer in einer Photopolymer-Formulierung verwendet wird. Die Farbtreue und Winkeltreue dieser Holgramme ist höher als die der Hologramme, die mit Hilfe der Photopolymer-Formulierungen der WO 2008/125229 A1 erhältlich sind.

Gemäß einer bevorzugten Ausführungsform ist vorgesehen, dass der oder die aliphatischen Alkohole mit mindestens einem Fluoratom substituiert sind. In diesem Fall können Hologramme erhalten werden, die einen deutlich reduzierten Peak Shift aufweisen, also in Bezug auf Farbtreue und Winkeltreue deutlich weniger kompensatorische Maßnahmen bei der Aufnahme und der Rekonstruktion der Hologramme erfordern.

Bevorzugt ist ebenfalls, wenn der oder die aliphatischen Alkohole lineare oder verzweigte C1-C10 Reste, bevorzugt lineare $C_2$-$C_4$ oder verzweigte $C_3$-Alkylreste aufweisen.

Besonders gute Ergebnisse lassen sich erzielen, wenn die aliphatischen Alkohole Trifluorethanol und/oder 1,1,1,3,3,3-Hexafluorpropan-2-ol sind.

In Weiterbildung der Erfindung ist vorgesehen, dass der oder die olefinisch ungesättigten organischen Reste Acrylat- oder Methacrylat-Strukturen aufweisen.

Weiterhin ist bevorzugt, wenn der oder die olefinisch ungesättigten organischen Reste mit einem oder mehreren Heteroatomen substituiert sind.

Ein weiterer Gegenstand der Erfindung ist eine Photopolymer-Formulierung umfassend Matrixpolymere, Schreibmonomere und Photoinitiatoren, bei der die Schreibmonomere ein Urethanacrylat nach einem der Ansprüche 1 bis 6 beinhalten.

Die Matrixpolymere können insbesondere Polyurethane sein.

Vorzugsweise sind die Polyurethane durch Umsetzung einer Isocyanatkomponente a) mit einer Isocyanatreaktiven Komponente b) erhältlich.

Die Isocyanatkomponente a) umfasst bevorzugt Polyisocyanate. Als Polyisocyanate können alle dem Fachmann an sich gut bekannten Verbindungen oder deren Mischungen eingesetzt werden, die im Mittel zwei oder mehr NCO-Funktionen pro Molekül aufweisen. Diese können auf aromatischer, araliphatischer, aliphatischer oder cycloaliphatischer Basis sein. In untergeordneten Mengen können auch Monoisocyanate und/oder ungesättigte Gruppen enthaltende Polyisocyanate mitverwendet werden.

Beispielsweise geeignet sind Butylendiisocyanat, Hexamethylendiisocyanat (HDI), Isophorondiisocyanat (IPDI), 1,8-Diisocyanato-4-(isocyanatomethyl)-octan, 2,2,4- und/oder 2,4,4-Trimethylhexamethylendiisocyanat, die isomeren Bis-(4,4'-isocyanatocyclohexyl)methan und deren Mischungen beliebigen Isomerengehalts, Isocyanatomethyl-1,8-octandiisocyanat 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat und/oder Triphenylmethan-4,4',4"-triisocyanat.

Ebenfalls möglich ist der Einsatz von Derivaten monomerer Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen.

Bevorzugt ist der Einsatz von Polyisocyanaten auf Basis aliphatischer und/oder cycloaliphatischer Di- oder Triisocyanate.

Besonders bevorzugt handelt es sich bei den Polyisocyanaten der Komponente a) um di- oder oligomerisierte aliphatische und/oder cycloaliphatische Di- oder Triisocyanate.

Ganz besonders bevorzugt sind Isocyanurate, Uretdione und/oder Iminooxadiazindione basierend auf HDI, 1,8-Diisocyanato-4-(isocyanatomethyl)-octan oder deren Mischungen.

Ebenfalls können als Komponente a) NCO-funktionelle Prepolymere mit Urethan-, Allophanat-, Biuret- und/oder Amidgruppen eingesetzt werden. Prepolymere der Komponente a) werden in dem Fachmann an sich gut bekannter Art und Weise durch Umsetzung von monomeren, oligomeren oder Polyisocyanaten a1) mit isocyanatreaktiven Verbindungen a2) in geeigneter Stöchiometrie unter optionalem Einsatz von Katalysatoren und Lösemitteln erhalten.

Als Polyisocyanate a1) eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Daneben können auch die diem Fachmann an sich gut bekannten höhermolekularen Folgeprodukte monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Komponente a1) eingesetzt werden können, sind Butylendiisocyanat, Hexamethylendiisocyanat (HDI), Isophorondiisocyanat (IPDI), Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und/oder 2,6-Toluen-diisocyanat.

Als isocyanatreaktive Verbindungen a2) zum Aufbau der Prepolymere werden bevorzugt OHfunktionelle Verbindungen eingesetzt. Diese sind analog den OH-funktionellen Verbindungen wie sie nachfolgend für die Komponente b) beschrieben sind.

Ebenfalls möglich ist der Einsatz von Aminen zur Prepolymerherstellung. Beispielsweise geeignet sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine®, aminterminierte Polymere mit zahlenmittleren Molmassen bis 10000 g/Mol oder deren beliebige Gemische untereinander.

Zur Herstellung von biuretgruppenhaltigen Prepolymeren wird Isocyanat im Überschuss mit Amin umgesetzt, wobei eine Biuretgruppe entsteht. Als Amine eignen sich in diesem Falle für die Umsetzung mit den erwähnten Di-, Tri- und Polyisocyanaten alle oligomeren oder polymeren, primären oder sekundären, difunktionellen Amine der vorstehend genannten Art.

Bevorzugte Präpolymere sind Urethane, Allophanate oder Biurete aus aliphatischen Isocyanat-funktionellen Verbindungen und oligomeren oder polymeren Isocyanat-reaktiven Verbindungen mit zahlenmittleren Molmassen von 200 bis 10000 g/Mol, besonders bevorzugt sind Urethane, Allophanate oder Biurete aus aliphatischen Isocyanat-funktionellen Verbindungen und oligomeren oder polymeren Polyolen oder Polyaminen mit zahlenmittleren Molmassen von 500 bis 8500 g/Mol und ganz besonders bevorzugt sind Allophanate aus HDI oder TMDI und difunktionellen Polyetherpolyolen mit zahlenmittleren Molmassen von 1000 bis 8200 g/Mol.

Bevorzugt weisen die vorstehend beschriebenen Präpolymere Restgehalte an freiem monomeren Isocyanat von weniger als 1 Gew.-%, besonders bevorzugt weniger als 0.5 Gew.-%, ganz besonders bevorzugt weniger als 0.2 Gew.-% auf.

Selbstverständlich kann die Isocyanatkomponente anteilsmäßig neben den beschriebenen Präpolymeren weitere Isocyanatkomponenten enthalten. Hierfür kommen in Betracht aromatische, araliphatische, aliphatische und cycloaliphatische Di-, Tri- oder Polyisocyanate verwendet. Es können auch Mischungen solcher Di-, Tri- oder Polyisocyanate eingesetzt werden. Beispiele geeigneter Di-, Tri- oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat (TMDI), die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren von überschüssigem Diisocyanat befreit wurden, insbesondere die des Hexamethylendiisocyanat. Besonders bevorzugt sind die oligomeren Isocyanurate, Uretdione und Iminooxadiazindione des HDI sowie deren Mischungen.

Es ist gegebenenfalls auch möglich, dass die Isocyanatkomponente a) anteilsmäßig Isocyanate enthält, die teilweise mit isocyanat-reaktiven ethylenisch ungesättigten Verbindungen umgesetzt sind. Bevorzugt werden hierbei als isocyanat-reaktives ethylenisch ungesättigten Verbindungen $\alpha,\beta$-ungesättigte Carbonsäurederivate wie Acrylate,

Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanat-reaktiven Gruppe. Als hydroxyfunktionelle Acrylate oder Methacrylate kommen beispielsweise Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono-(meth)acrylate, wie z.B. Tone® M100 (Dow, USA), 2-Hydroxypropyl(meth)acrylat, 4-Hydroxy-butyl(meth)acrylat, 3-Hydroxy-2,2-dimethylpropyl(meth)acrylat, die hydroxyfunktionellen Mono-, Di- oder Tetra(meth)acrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische in Betracht. Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Der Anteil an Isocyanaten die teilweise mit isocyanat-reaktiven ethylenisch ungesättigten Verbindungen umgesetzt sind an der Isocyanatkomponente a) beträgt 0 bis 99 %, bevorzugt 0 bis 50 %, besonders bevorzugt 0 bis 25 % und ganz besonders bevorzugt 0 bis 15 %.

Es ist gegebenenfalls auch möglich, dass die vorgenannten Isocyanatkomponente a) vollständig oder anteilsmäßig Isocyanate enthält, die ganz oder teilweise mit dem Fachmann aus der Beschichtungstechnologie bekannten Blockierungsmitteln umgesetzt sind. Als Beispiel für Blockierungsmittel seien genannt: Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-tert.-Butyl-benzylamin, Cyclopentanoncarboxyethylester oder beliebige Gemische dieser Blockierungsmittel.

Als Komponente b) können an sich alle polyfunktionellen, isocyanatreaktiven Verbindungen eingesetzt werden, die im Mittel wenigstens 1.5 isocyanatreaktive Gruppen pro Molekül aufweisen.

Isocyanatreaktive Gruppen im Rahmen der vorliegenden Erfindung sind bevorzugt Hydroxy-, Amino- oder Thiogruppen, besonders bevorzugt sind Hydroxyverbindungen.

Geeignete polyfunktionelle, isocyanatreaktive Verbindungen sind beispielsweise Polyester-, Polyether-, Polycarbonat-, Poly(meth)acrylat- und/oder Polyurethanpolyole.

Als Polyesterpolyole sind beispielsweise lineare Polyesterdiole oder verzweigte Polyesterpolyole geeignet, wie sie in bekannter Weise aus aliphatischen, cycloaliphatischen oder aromatischen Di- bzw. Polycarbonsäuren bzw. ihren Anhydriden mit mehrwertigen Alkoholen einer OH-Funktionalität ≥ 2 erhalten werden.

Beispiele für solche Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder deren beliebige Gemische untereinander.

Beispiele für solche geeigneten Alkohole sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder deren beliebige Gemische untereinander.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren, wie sie bevorzugt durch Anlagerung von Lactonen bzw. Lactongemischen wie Butyrolacton, ε-Caprolacton und/oder Methyl-ε-caprolacton an hydroxyfunktionelle Verbindungen wie mehrwertige Alkohole einer OH-Funktionalität ≥ 2 beispielsweise der vorstehend genannten Art erhalten werden können.

Solche Polyesterpolyole haben bevorzugt zahlenmittlere Molmassen von 400 bis 4000 g/Mol, besonders bevorzugt von 500 bis 2000 g/Mol. Ihre OH-Funktionalität beträgt bevorzugt 1.5 bis 3.5, besonders bevorzugt 1.8 bis 3.0.

Geeignete Polycarbonatpolyole sind in an sich bekannter Weise durch Umsetzung von organischen Carbonaten oder Phosgen mit Diolen oder Diol-Mischungen zugänglich.

Geeignete organische Carbonate sind Dimethyl-, Diethyl- und Diphenylcarbonat.

Geeignete Diole bzw. Mischungen umfassen die an sich im Rahmen der Polyestersegmente genannten mehrwertigen Alkoholen einer OH-Funktionalität ≥ 2, bevorzugt 1,4-Butandiol, 1,6-Hexandiol und/oder 3-Methylpentandiol, oder auch Polyesterpolyole können zu Polycarbonatpolyolen umgearbeitet werden.

Solche Polycarbonatpolyole haben bevorzugt zahlenmittlere Molmassen von 400 bis 4000 g/Mol, besonders bevorzugt von 500 bis 2000 g/Mol. Die OH-Funktionalität dieser Polyole beträgt bevorzugt 1.8 bis 3.2, besonders bevorzugt 1.9 bis 3.0.

Geeignete Polyetherpolyole sind gegebenenfalls blockweise aufgebaute Polyadditionsprodukte cyclischer Ether an OH- oder NH-funktionelle Startermoleküle.

Geeignete cyclische Ether sind beispielsweise Styroloxide, Ethylenoxid, Propylenoxid, Tetrahydrofuran, Butylenoxid, Epichlorhydrin, sowie ihre beliebigen Mischungen.

Als Starter können die an sich im Rahmen der Polyesterpolyole genannten mehrwertigen Alkohole einer OH-Funktionalität ≥ 2 sowie primäre oder sekundäre Amine und Aminoalkohole verwendet werden.

Bevorzugte Polyetherpolyole sind solche der vorgenannten Art ausschließlich basierend auf Propylenoxid oder statistische oder Block-Copolymere basierend auf Propylenoxid mit weiteren 1-Alkylenoxiden, wobei der 1-Alykenoxidanteil nicht höher als 80 Gew.-% ist. Daneben sind Poly(trimethylenoxid)e gemäß Formel (III) sowie Mischungen der als bevorzugt genannten Polyole bevorzugt. Besonders bevorzugt sind Propylenoxid-homopolymere sowie statistische oder Block-Copolymere, die Oxyethylen-, Oxypropylen- und/oder Oxybutyleneinheiten aufweisen, wobei der Anteil der Oxypropyleneinheiten bezogen auf die Gesamtmenge aller Oxyethylen-, Oxypropylen- und Oxybutyleneinheiten mindestens 20 Gew.-%, bevorzugt mindestens 45 Gew.-% ausmacht. Oxypropylen- und Oxybutylen- umfasst hierbei alle jeweiligen linearen und verzweigten C3- und C4-Isomere.

Solche Polyetherpolyole haben bevorzugt zahlenmittlere Molmassen von 250 bis 10000 g/Mol, besonders bevorzugt von 500 bis 8500 g/Mol und ganz besonders bevorzugt von 600 bis 4500 g/Mol. Die OH-Funktionalität beträgt bevorzugt 1.5 bis 4.0, besonders bevorzugt 1.8 bis 3.1.

Daneben sind als Bestandteile der Komponente b) als polyfunktionelle, isocyanatreaktive Verbindungen auch niedermolekulare, d.h. mit Molekulargewichten kleiner 500 g/mol, kurzkettige, d.h. 2 bis 20 Kohlenstoffatome enthaltende aliphatische, araliphatische oder cycloaliphatische di, tri oder polyfunktionelle Alkohole geeignet.

Dies können beispielsweise sein Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure (2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Die eingesetzten Photoinitiatoren sind üblicherweise durch aktinische Strahlung aktivierbare Initiatoren, die eine Polymerisation der entsprechenden polymerisierbaren Gruppen auslösen. Photoinitiatoren sind an sich bekannte, kommerziell vertriebene Verbindungen, wobei zwischen unimolekularen (Typ I) und bimolekularen (Typ II) Initiatoren unterschieden wird. Desweiteren werden diese Initiatoren je nach chemischer Natur für die radikalische, die anionische (oder), die kationische (oder gemischte) Formen der vorgenannten Polymerisationen eingesetzt.

Die Photoinitiatoren können insbesondere einen anionischen, kationischen oder neutralen Farbstoff und einen Coinitiator umfassen.

(Typ I)-Systeme für die radikalische Photopolymerisation sind z.B. aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylophosphinoxide, Phenylglyoxylsäureester, Campherchinon, alpha-Aminoalkylphenone, alpha-,alpha-Dialkoxyacetophenone, 1-[4-(Phenylthio)phenyl]octan-1,2-dion-2-(O-benzoyloxim) und alpha-Hydroxyalkylphenone. Auch die in EP-A 0223587 beschriebenen Photoinitiatorsysteme bestehend aus einer Mischung aus einem Ammoniumarylborat und einem oder mehreren Farbstoffen können als Photoinitiator eingesetzt werden. Als Ammoniumarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium Dipentyldiphenylborat und Tetrabutylammonium Tris-(3-Chlor-4-methylphenyl)-hexylborat. Als Farbstoffe eignen sich beispielsweise Neu-Methylenblau, Thionin, Basic Yellow, Pinacynol Chlorid, Rhodamin 6G, Gallocyanin, Ethylviolett, Victoria Blue R, Celestine Blue, Chinaldinrot, Kristallviolett, Brilliant Grün, Astrazon Orange G, Darrow Red, Pyronin Y, Basic Red 29, Pyrillium I, Cyanin und Methylenblau, Azur A (Cunningham et al., RadTech'98 North America UV/EB Conference Proceedings, Chicago, Apr. 19-22, 1998).

Die für die anionische Polymerisation verwendeten Photoinitiatoren sind in der Regel (Typ I)-Systeme und leiten sich von Übergangsmetall-Komplexen der ersten Reihe ab. Hier sind ChromSalze, wie z.B. trans-$Cr(NH_3)_2(NCS)_4^-$ (Kutal et al, Macromolecules 1991, 24, 6872) oder Ferrocenyl-Verbindungen (Yamaguchi et al. Macromolecules 2000, 33, 1152). Eine weitere Möglichkeit der anionischen Polymerisation besteht in der Verwendung von Farbstoffen, wie Kristallviolett Leukonitril oder Malchit Grün Leukonitril, die durch photolytischen Zerfall Cyanoacrylate polymerisieren können (Neckers et al. Macromolecules 2000, 33, 7761). Allerdings wird dabei das Chromophor in das Polymer eingebaut, so dass die resultierenden Polymere durchgefärbt sind.

Die für die kationische Polymerisation verwendeten Photoinitiatoren bestehen im wesentlichen aus drei Klassen: Aryldiazonium-Salze, Onium-Salze (hier speziell: Iodonium-, Sulfonium- und Selenonium-Salze) sowie Organometall-Verbindungen. Phenyldiazonium-Salze können unter Bestrahlung sowohl in Gegenwart als auch in Abwesenheit eines Wasserstoff-Donors ein Kation erzeugten, dass die Polymerisation initiiert. Die Effizienz des Gesamtsystems wird durch die Natur des verwendeten Gegenions zur Diazonium-Verbindung bestimmt. Bevorzugt sind hier die wenig reaktiven

aber recht teuren $SbF_6^-$, $AsF_6^-$ oder $PF_6^-$. Für den Einsatz in Beschichtung dünner Filme sind diese Verbindungen i.d.R wenig geeignet, da die den nach der Belichtung freigesetzten Stickstoff die Oberflächegüte herabgesetzt wird (pinholes) (Li et al., Polymeric Materials Science and Engineering, 2001, 84, 139). Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalanion, welches sich durch H-Abstraktion stabilisiert und ein Proton freisetzt und dann die kationische Polymerisation startet (Dektar et al. J. Org. Chem. 1990, 55, 639; J. Org. Chem., 1991, 56. 1838). Dieser Mechanimus ermöglicht den Einsatz von Iodonium-Salzen ebenfalls für die radikalische Photopolymerisation. Hierbei kommt erneut der Wahl des Gegenions eine große Bedeutung zu, bevorzugt werden ebenfalls die recht teuren $SbF_6^-$, $AsF_6^-$ oder $PF_6^-$. Ansonsten in dieser Strukturklasse die Wahl der Substitution des Aromaten recht frei und im wesentlichen durch die Verfügbarkeit geeigneter Startbausteine für die Synthese bestimmt. Bei den Sulfonium-Salzen handelt es sich um Verbindungen, die in nach Norrish(II) zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden i.d.R. mit $SbF_6^-$ Salzen erzielt. Da die Eigenabsorption von Iodonium- und Sulfonium-Salze bei <300nm liegt, müssen diese Verbindungen für die Photopolymerisation mit nahem UV oder kurzwelligem sichtbarem Licht entsprechend sensibilisiert werden. Dies gelingt durch die Verwendung von höher absorbierenden Aromaten wie z.B. Anthracen und Derivaten (Gu et al., Am. Chem. Soc. Polymer Preprints, 2000, 41 (2), 1266) oder Phenothiazin bzw. dessen Derivate (Hua et al, Macromolecules 2001, 34, 2488-2494).

Es kann vorteilhaft sein auch Gemische dieser Verbindungen einzusetzen. Je nach zur Härtung verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Bevorzugte Photoinitiatoren sind Mischungen aus Tetrabutylammonium Tetrahexylborat, Tetrabutylammonium Triphenylhexylborat, Tetrabutylammonium Tris-(3-fluorphenyl)-hexylborat und Tetrabutylammonium Tris-(3-Chlor-4-methylphenyl)-hexylborat mit Farbstoffen wie beispielsweise Astrazon Orange G, Methylenblau, Neu Methylenblau, Azur A, Pyrillium I, Safranin O, Cyanin, Gallocyanin, Brilliant Grün, Kristallviolett, Ethylviolett und Thionin.

Die Photopolymer-Formulierung kann zusätzlich Urethane als Weichmacher enthalten, wobei die Urethane insbesondere mit wenigstens einem Fluoratom substituiert sein können.

Bevorzugt können die Urethane die allgemeine Formel (III)

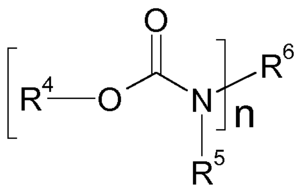

(III)

haben, in der n≥1 und n≤8 ist und $R^4$, $R^5$, $R^6$ Wasserstoff und / oder unabhängig voneinander lineare, verzweigte, cyclische oder heterocyclische unsubstituierte oder gegebenenfalls auch mit Heteroatomen substituierte organische Reste sind, wobei bevorzugt mindestens einer der Reste $R^4$, $R^5$, $R^6$ mit wenigstens einem Fluoratom substituiert ist und besonders bevorzugt $R^4$ ein organischer Rest mit mindestens einem Fluoratom ist.

Bei einer weiteren bevorzugten Ausführungsform ist vorgesehen, dass die Schreibmonomere zusätzlich ein monofunktionales Schreibmonomer umfassen, wobei es sich insbesondere um ein multifunktionelles Acrylat handeln kann. Besonders bevorzugt kann das monofunktionelle Acrylat die allgemeine Formel (IV)

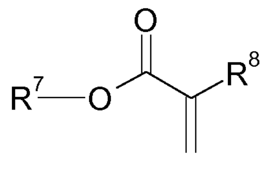

(IV)

haben, in der $R^7$, $R^8$ Wasserstoff und / oder unabhängig voneinander lineare, verzweigte, cyclische oder heterocyclische unsubstituierte oder gegebenenfalls auch mit Heteroatomen substituierte organische Reste sind.

Ein weiterer Gegenstand der Erfindung ist auch die Verwendung einer erfindungsgemäßen Photopolymer-Formulierung zur Herstellung holographischer Medien, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

## Beispiele

Die Erfindung wird im Folgenden anhand von Beispielen näher erläutert.
Sofern nicht abweichend vermerkt beziehen sich alle Prozentangaben auf Gewichtsprozent.

## Messmethoden:

Der Brechungsindex n in Abhängigkeit von der Wellenlänge der Proben wurden aus den Transmissions- und Reflexionsspektren erhalten. Dazu wurden ca. 100 - 300 nm dicke Filme der Proben auf Quarzglasträger aus verdünnter Lösung in Butylacetat aufgeschleudert. Das Transmissions- und Reflexionsspektrum dieses Schichtpaketes wurde mit einem Spektrometer der Firma STEAG ETA-Optik, CD-Measurement System ETA-RT gemessen und danach die Schichtdicke und der spektrale Verlauf von n an die gemessenen Transmissions- und Reflexionsspektren angepasst. Dies geschieht mit der internen Software des Spektrometers und erfordert zusätzlich die n Daten des Quarzglassubstrates, die in einer Blindmessung vorab bestimmt wurden.
Die angegebene Doppelbindungsdichte berechnet sich aus der Summe der Doppelbindungsdichten der eingesetzen olefinisch ungesättigten Verbindungen und deren Anteil in Gew.-% in der Formulierung, mit der Einheit val/kg.
Die angegebenen NCO-Werte (Isocyanat-Gehalte) wurden gemäß DIN EN ISO 11909 bestimmt.

**Messung der holographischen Eigenschaften DE und $\Delta$n der holographischen Medien mittels Zweistrahlinterferenz in Reflexionsanordnung**

Die hergestellten Medien wurden anschließend mittels einer Messanordnung gemäß Figur 1 wie folgt auf ihre holographischen Eigenschaften geprüft:

> Der Strahl eines He-Ne Lasers (Emissionswellenlänge 633 nm) wurde mit Hilfe des Raumfilter (SF) und zusammen mit der Kollimationslinse (CL) in einen parallelen homogenen Strahl umgewandelt. Die finalen Querschnitte des Signal und Referenzstrahls werden durch die Irisblenden (I) festgelegt. Der Durchmesser der Irisblendenöffnung beträgt 0.4 cm. Die polarisationsabhängigen Strahlteiler (PBS) teilen den Laserstrahl in zwei kohärente gleich polarisierte Strahlen. Über die $\lambda/2$ Plättchen wurden die Leistung des Referenzstrahls auf 0.5 mW und die Leistung des Signalstrahls auf 0.65 mW eingestellt. Die Leistungen wurden mit den Halbleiterdetektoren (D) bei ausgebauter Probe bestimmt. Der Einfallswinkel ($\alpha_0$) des Referenzstrahls beträgt -21.8°, der Einfallswinkel ($\beta_0$) des Signalstrahls beträgt 41.8°. Die Winkel werden ausgehend von der Probennormale zur Strahlrichtung gemessen. Gemäß Figur 1 hat daher $\alpha_0$ ein negatives Vorzeichen und $\beta_0$ ein positives Vorzeichen. Am Ort der Probe (Medium) erzeugte das Interferenzfeld der zwei überlappenden Strahlen ein Gitter heller und dunkler Streifen die senkrecht zur Winkelhalbierenden der zwei auf die Probe einfallenden Strahlen liegen (Reflexionshologramm). Der Streifenabstand A, auch Gitterperiode genannt, im Medium beträgt ~ 225 nm (der Brechungsindex des Mediums zu ~1.504 angenommen).

Figur 1 zeigt die Geometrie eines Holographic Media Testers (HMT) bei $\lambda$ = 633 nm (He-Ne Laser): M = Spiegel, S = Verschluss, SF = Raumfilter, CL = Kollimatorlinse, $\lambda/2$ = $\lambda/2$ Platte, PBS = polarisationsempfindlicher Strahlteiler, D = Detektor, I = Irisblende, $\alpha_0$ = -21.8°, $\beta_0$ = 41.8° sind die Einfallswinkel der kohärenten Strahlen außerhalb der Probe (des Mediums) gemessen. RD = Referenzrichtung des Drehtisches.
Mit einem holographischen Versuchsaufbau wie in Figur 1 dargestellt wurden die Beugungseffizienz (DE) der Medien gemessen.
Es wurden auf folgende Weise Hologramme in das Medium geschrieben:

- Beide Shutter (S) sind für die Belichtungszeit *t* geöffnet.
- Danach wurde bei geschlossenen Shuttern (S) dem Medium 5 Minuten Zeit für die Diffusion der noch nicht polymerisierten Schreibmonomere gelassen.

Die geschriebenen Hologramme wurden nun auf folgende Weise ausgelesen. Der Shutter des Signalstrahls blieb geschlossen. Der Shutter des Referenzstrahls war geöffnet. Die Irisblende des Referenzstrahls wurde auf einen Durchmesser < 1 mm geschlossen. Damit erreichte man, dass für alle Drehwinkel ($\Omega$) des Mediums der Strahl immer vollständig im zuvor geschriebenen Hologramm lag. Der Drehtisch überstrich nun computergesteuert den Winkelbereich von $\Omega_{min}$ bis $\Omega_{max}$ mit einer Winkelschrittweite von 0.05°. $\Omega$ wird von der Probennormale zur Referenzrichtung des

Drehtisches gemessen. Die Referenzrichtung des Drehtisches ergibt sich dann wenn beim Schreiben des Hologramms der Einfallswinkel des Referenz- und des Signalstrahls betragsmäßig gleich sind also $\alpha_0$ = -31.8° und $\beta_0$ = 31.8° gilt. Dann beträgt $\Omega_{recording}$ = 0°. Für $\alpha_0$ = -21.8° und $\beta_0$ = 41.8° beträgt $\Omega_{recording}$ daher 10°. Allgemein gilt für das Interferenzfeld beim Schreiben ("recording") des Hologramms:

$$\alpha_0 = \theta_0 + \Omega_{recording}$$

$\theta_0$ ist der Halbwinkel im Laborsystem außerhalb des Mediums und es gilt beim Schreiben des Hologramms:

$$\theta_0 = \frac{\alpha_0 - \beta_0}{2}$$

In diesem Fall gilt also $\theta_0$ = -31.8°. An jedem angefahrenen Drehwinkel $\Omega$ wurden die Leistungen des in der nullten Ordnung transmittierten Strahls mittels des entsprechenden Detektors D und die Leistungen des in die erste Ordnung abgebeugten Strahls mittels des Detektors D gemessen. Die Beugungseffizienz ergab sich bei jedem angefahrenen Winkel $\Omega$ als der Quotient aus:

$$\eta = \frac{P_D}{P_D + P_T}$$

$P_D$ ist die Leistung im Detektor des abgebeugten Strahls und $P_T$ ist die Leistung im Detektor des transmittierten Strahls.

Mittels des oben beschriebenen Verfahrens wurde die Braggkurve, sie beschreibt den Beugungswirkungsgrad $\eta$ in Abhängigkeit des Drehwinkels $\Omega$□ des geschriebenen Hologramms gemessen und in einem Computer gespeichert. Zusätzlich wurde auch die in die nullte Ordnung transmittierte Intensität gegen den Drehwinkel $\Omega$ aufgezeichnet und in einem Computer gespeichert.

Die maximale Beugungseffizienz (DE = $\eta_{max}$) des Hologramms, also sein Spitzenwert, wurde bei $\Omega$reconstruction ermittelt. Eventuell musste dazu die Position des Detektors des abgebeugten Strahls verändert werden, um diesen maximalen Wert zu bestimmen.

Der Brechungsindexkontrast $\Delta n$ und die Dicke d der Photopolymerschicht wurde nun mittels der Coupled Wave Theorie (siehe; H. Kogelnik, The Bell System Technical Journal, Volume 48, November 1969, Number 9 Seite 2909 - Seite 2947) an die gemessene Braggkurve und den Winkelverlauf der transmittierten Intensität ermittelt. Dabei ist zu beachten, dass wegen der durch die Photopolymerisation auftretenden Dickenschwindung der Streifenabstand Λ' des Hologramms und die Orientierung der Streifen (slant) vom Streifenabstand Λ des Interferenzmusters und dessen Orientierung abweichen kann. Demnach wird auch der Winkel $\alpha_0'$ bzw. der entsprechende Winkel des Drehtisches $\Omega_{reconstruction}$, bei dem maximale Beugungseffizienz erreicht wird von $\alpha_0$ bzw. vom entsprechenden $\Omega_{recording}$ abweichen. Dadurch verändert sich die Bragg-Bedingung. Diese Veränderung wird im Auswerteverfahren berücksichtigt. Das Auswerteverfahren wird im Folgenden beschrieben:

Alle geometrischen Größen, die sich auf das geschriebene Hologramm beziehen und nicht auf das Interferenzmuster werden als gestrichene Größen dargestellt.

Für die Braggkurve $\eta(\Omega)$ eines Reflexionshologramms gilt nach Kogelnik:

$$\eta = \begin{cases} \dfrac{1}{1 - \dfrac{1-(\xi/\nu)^2}{\sin^2\left(\sqrt{\xi^2 - \nu^2}\right)}}, \text{ für } \nu^2 - \xi^2 < 0 \\ \dfrac{1}{1 + \dfrac{1-(\xi/\nu)^2}{\sinh^2\left(\sqrt{\nu^2 - \xi^2}\right)}}, \text{ für } \nu^2 - \xi^2 \geq 0 \end{cases}$$

mit:

$$\nu = \frac{\pi \cdot \Delta n \cdot d'}{\lambda \cdot \sqrt{|c_s \cdot c_r|}}$$

$$\xi = -\frac{d'}{2 \cdot c_s} \cdot DP$$

$$c_s = \cos(\vartheta') - \cos(\psi') \cdot \frac{\lambda}{n \cdot \Lambda'}$$

$$c_r = \cos(\vartheta')$$

$$DP = \frac{\pi}{\Lambda'} \cdot \left(2 \cdot \cos(\psi' - \vartheta') - \frac{\lambda}{n \cdot \Lambda'}\right)$$

$$\psi' = \frac{\beta' + \alpha'}{2}$$

$$\Lambda' = \frac{\lambda}{2 \cdot n \cdot \cos(\psi' - \alpha')}$$

Beim Auslesen des Hologramms ("reconstruction") gilt wie analog oben dargestellt:

$$\vartheta'_0 = \theta_0 + \Omega$$

$$\sin(\vartheta'_0) = n \cdot \sin(\vartheta')$$

An der Bragg-Bedingung ist das "Dephasing" DP = 0. Und es folgt entsprechend:

$$\alpha'_0 = \theta_0 + \Omega_{reconstruction}$$

$$\sin(\alpha'_0) = n \cdot \sin(\alpha')$$

Der noch unbekannte Winkel β' kann aus dem Vergleich der Bragg-Bedingung des Interferenzfeldes beim Schreiben des Hologramms und der Bragg-Bedingung beim Auslesen des Hologramms ermittelt werden unter der Annahme, dass nur Dickenschwindung stattfindet. Dann folgt:

$$\sin(\beta') = \frac{1}{n} \cdot \left[\sin(\alpha_0) + \sin(\beta_0) - \sin(\theta_0 + \Omega_{reconstruction})\right]$$

ν ist die Gitterstärke, ξ ist der Detuning Parameter und ψ' die Orientierung (Slant) des Brechungsindexgitters das geschrieben wurde. α' und β' entsprechen den Winkeln α0 und β0 des Interferenzfeldes beim Schreiben des Hologramms, aber im Medium gemessen und für das Gitter des Hologramms gültig (nach Dickenschwindung). n ist der mittlere Brechungsindex des Photopolymers und wurde zu 1.504 gesetzt. λ ist die Wellenlänge des Laserlichts im Vakuum.

Die maximale Beugungseffizienz (DE = $\eta_{max}$) ergibt sich dann für ξ = 0 zu:

$$DE = \tanh^2(\nu) = \tanh^2\left(\frac{\pi \cdot \Delta n \cdot d'}{\lambda \cdot \sqrt{\cos(\alpha') \cdot \cos(\alpha' - 2\psi)}}\right)$$

Figur 2 zeigt die gemessene transmittierte Leistung $P_T$ (rechte *y*-Achse) als durchgezogene Linie gegen das Winkeldetuning ΔΩ aufgetragen, die gemessene Beugungseffizienz η (linke γ-Achse) als ausgefüllte Kreise gegen das Winkeldetuning ΔΩ aufgetragen (soweit die endliche Größe des Detektors es erlaubte) und die Anpassung der Kogelnik Theorie als gestrichelte Linie (linke *y*-Achse).

Die Messdaten der Beugungseffizienz, die theoretische Braggkurve und die transmittierte Intensität werden wie in Figur 2 gezeigt gegen den zentrierten Drehwinkel $\Delta\Omega \equiv \Omega_{reconstruction} - \Omega = \alpha'_0 - \vartheta'_0$, auch Winkeldetuning genannt, aufgetragen.

Da DE bekannt ist wird die Form der theoretischen Braggkurve nach Kogelnik nur noch durch die Dicke *d'* der Photopolymerschicht bestimmt. Δn wird über DE für gegebene Dicke *d'* so nachkorrigiert, dass Messung und Theorie von DE immer übereinstimmen. *d'* wird nun solange angepasst bis die Winkelpositionen der ersten Nebenminima der theoretischen Braggkurve mit den Winkelpositionen der ersten Nebenmaxima der transmittierten Intensität übereinstimmen und zudem die volle Breite bei halber Höhe (FWHM) für die theoretische Braggkurve und für die transmittierte Intensität übereinstimmen.

Da die Richtung in der ein Reflexionshologramm bei der Rekonstruktion mittels eines Ω-Scans mitrotiert, der Detektor für das abgebeugte Licht aber nur einen endlichen Winkelbereich erfassen kann, wird die Braggkurve von breiten Holgrammen (kleines *d'*) bei einem Ω-Scan nicht vollständig erfasst, sondern nur der zentrale Bereich, bei geeigneter Detektorpositionierung. Daher wird die zur Braggkurve komplementäre Form der transmittierten Intensität zur Anpassung der Schichtdicke *d'* zusätzlich herangezogen.

Figur 2 zeigt die Darstellung der Braggkurve η nach der Coupled Wave Theorie (gestrichelte Linie), des gemessenen Beugungswirkungsgrades (ausgefüllte Kreise) und der transmittierten Leistung (schwarz durchgezogene Linie) gegen das Winkeldetuning ΔΩ.

Für eine Formulierung wurde diese Prozedur eventuell mehrfach für verschiedene Belichtungszeiten *t* an verschiedenen Medien wiederholt, um festzustellen bei welcher mittleren Energiedosis des einfallenden Laserstrahls beim Schreiben des Hologramms DE in den Sättigungswert übergeht. Die mittlere Energiedosis E ergibt sich wie folgt aus den Leistungen der zwei den Winkeln $\alpha_0$ und $\beta_0$ zugeordneten Teilstrahlen (Referenzstrahl mit $P_r$ = 0.50 mW und Signalstrahl mit $P_s$ = 0.63 mW), der Belichtungszeit t und dem Durchmesser der Irisblende (0.4 cm):

$$E\ (\mathrm{mJ/cm^2}) = \frac{2 \cdot [P_r + P_s] \cdot t\ (\mathrm{s})}{\pi \cdot 0.4^2\ \mathrm{cm}^2}$$

Die Leistungen der Teilstrahlen wurden so angepasst, dass in dem Medium bei den verwendeten Winkeln $\alpha_0$ und $\beta_0$, die gleiche Leistungsdichte erreicht wird.

**Verwendete Substanzen:**

CGI-909 (Tetrabutylammonium-tris(3-chlor-4-methylphenyl)(hexyl)borat, [1147315-11-4]) ist ein von der Fa. CIBA Inc., Basel, Schweiz, hergestelltes Versuchsprodukt.

Trifluoroethanol und 1,1,1,3,3,3-Hexafluorpropan-2-ol (Hexafluorisopropanol) wurden von Sigma-Aldrich bezogen.

Die Urethanacrylate 1 und 2, das Polyol 1 und das fluorierte Urethan 1 sind experimentelle Produkte der Bayer MaterialScience AG, Leverkusen, Deutschland und ihre Herstellung ist unten beschrieben.

**Herstellung der erfindungsgemäßen Urethanacrylate:**

**Beispiel 1: [(4-{[(2,2,2-Trifluorethoxy)carbonyl]amino}phenoxy)phosphorothioyl]-bis(oxybenzol-4,1-diylcarbamoyloxyethan-2,1-diyl)bisacrylat**

In einem 500 mL Rundkolben wurden 0.10 g 2,6-Di-tert.-butyl-4-methylphenol, 0.05 g Dibutylzinndilaurat (Desmorapid Z, Bayer MaterialScience AG, Leverkusen, Deutschland) sowie 217 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Es wurden 12.3 g Trifluoroethanol zugegeben und 8 h nachgerührt. Anschließend wurden 28.9 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt und das Produkt wurde als farbloses Öl erhalten.

**Beispiel 2: {[4-({[(1,1,1,3,3,3-Hexafluorpropan-2-yl)oxy]carbonyl}amino)-phenoxy]phosphorothioyl}bis(oxybenzol-4,1-diylcarbamoyloxyethan-2,1-diyl)bisacrylat**

In einem 2 L Rundkolben wurden 0.50 g 2,6-Di-tert.-butyl-4-methylphenol, 0.25 g Dibutylzinndilaurat (Desmorapid Z, Bayer MaterialScience AG, Leverkusen, Deutschland) sowie und 1 kg einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Es wurden 95.3 g Hexafluoroisopropanol zugegeben und 8 h nachgerührt. Anschließend wurden 135.5 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt und das Produkt wurde als farbloses Öl erhalten.

**Beispiel 3: 2-{[(4-{[Bis(4-{[(2,2,2-trifluorethoxy)carbonyl]amino}phenoxy)phosphorothioyl]-oxy}phenyl)carbamoyl]oxy}ethylacrylat**

In einem 500 mL Rundkolben wurden 0.10 g 2,6-Di-tert.-butyl-4-methylphenol, 0.05 g Dibutylzinndilaurat (Desmorapid Z, Bayer MaterialScience AG, Leverkusen, Deutschland) sowie und 222 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Es wurden 25.5 g Trifluoroethanol zugegeben und nachgerührt bis der NCO Gehalt bei 1.9 Gew.- % NCO lag. Anschließend wurden 14.6 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt und das Produkt wurde als farbloses Öl erhalten.

**Beispiel 4: [(4-{[(2,2,2-Trifluorethoxy)carbonyl]amino}phenoxy)-phosphorothioyl]bis(oxybenzol-4,1-diylcarbamoyloxybutan-4,1-diyl)bisacrylat**

In einem 500 mL Rundkolben wurden 0.10 g 2,6-Di-tert.-butyl-4-methylphenol, 0.05 g Dibutylzinndilaurat (Desmorapid Z, Bayer MaterialScience AG, Leverkusen, Deutschland) sowie und 201 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Es wurden 11.5 g Trifluoroethanol zugegeben und nachgerührt bis der NCO Gehalt bei 1.9 Gew. % NCO lag. Anschließend wurden 33.6 g 2-Hydroxybutylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt und das Produkt wurde als farbloses Öl erhalten.

**Beispiel 5: {[4-({[(1,1,1,3,3,3-Hexafluorpropan-2-yl)oxy]carbonyl}amino)phenoxy]-phosphorothioyl}bis(oxybenzol-4,1-diylcarbamoyloxybutan-4,1-diyl)bisacrylat**

In einem 250 mL Rundkolben wurden 0.02 g 2,6-Di-tert.-butyl-4-methylphenol, 0.01 g Dibutylzinndilaurat (Desmorapid Z, Bayer MaterialScience AG, Leverkusen, Deutschland) sowie und 47.0 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Es wurden 4.5 g Hexafluoroisopropanol zugegeben und 8 h nachgerührt. Anschließend wurden 7.8 g 2-Hydroxybutylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt und das Produkt wurde als farbloses Öl erhalten.

**Herstellung der Vergleichs-Urethanacrylate**

**Herstellung des Urethanacrylats 1: Phosphorothioyltris(oxybenzol-4,1-diylcarbamoyloxyethan-2,1-diyl)trisacrylat**

In einem 500 mL Rundkolben wurden 0.1 g 2,6-Di-tert.-butyl-4-methylphenol, 0.05 g Dibutylzinndilaurat (Desmorapid Z, Bayer MaterialScience AG, Leverkusen, Deutschland) sowie und 213.0 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0.1 % gesunken war. Danach wurde abgekühlt und im Vakuum das Ethylacetat vollständig entfernt. Das Produkt wurde als teilkristalliner Feststoff erhalten.

**Herstellung des Urethanacrylats 2: 2-({[3-(Methylsulfanyl)phenyl]carbamoyl}oxy)-propylethylprop-2-enoat**

In einem 250 mL Rundkolben wurden 0.05 g 2,6-Di-tert.-butyl-4-methylphenol, 0.02 g Desmorapid Z, 26.8 g 3-(Methylthio)phenylisocyanat in 50 g Ethylacetat vorgelegt und auf 60 °C erwärmt. Anschließend wurden 21.1 g 2-Hydroxyethylacrylat zugetropft und die Mischung weiter auf 60 °C gehalten, bis der Isocyanatgehalt unter 0.1 % gesunken war. Danach wurde das Ethylacetat bei 5 mbar abdestilliert und abgekühlt. Das Produkt wurde als hellgelbe Flüssigkeit erhalten.

**Herstellung des fluorierten Urethans 1: 2,2,3,3,4,4,5,5,6,6,7,7,8,8,9,9-Hexadecafluornonylbutylcarbamat**

In einem 1 L Rundkolben wurden 0.50 g Desmorapid Z und 186 g n-Butylisocyanat vorgelegt und auf 60 °C erwärmt. Anschließend wurden 813 g 2,2,3,3,4,4,5,5,6,6,7,7,8,8,9,9-Hexadecafluornonanol zugetropft und die Mischung weiter auf 60 °C gehalten, bis der Isocyanatgehalt unter 0.1 % gesunken war. Danach wurde abgekühlt. Das Produkt wurde als farbloses Öl erhalten.

**Herstellung der Polyol-Kompoente:**

**Polyol 1:**

In einem 1 L Kolben wurden 0.18 g Zinnoctoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsiger Feststoff erhalten.

**Zusammenfassung der gemessenen Brechungsindices der hier verwendeten Verbindungen:**

**Tabelle 1:** Brechungsindices der in den Beispiele und Vergleichsbeispielen verwendeten Verbindungen

| Verbindung | Brechungsindex (405 nm) |
|---|---|
| Beispiel 1 | 1.626 |
| Beispiel 2 | 1.616 |
| Beispiel 3 | 1.606 |

(fortgesetzt)

| Verbindung | Brechungsindex (405 nm) |
|---|---|
| Beispiel 4 | 1.616 |
| Beispiel 5 | 1.611 |
| Urethanacrylat 1 | 1.624 |
| Urethanacrylat 2 | 1.626 |
| | Brechungsindex $n_D^{20}$ |
| Fluorurethan 1 | 1.3555 |

## Herstellung der Medien

**Medium 1:**

3.40 g der wie oben beschrieben hergestellten Polyol-Komponente wurden mit 3.50 g {[4-({[(1,1,1,3,3,3-Hexafluorpropan-2-yl)oxy]carbonyl}amino)¬phenoxy]phosphorothioyl}bis(oxybenzol-4,1-diylcarbamoyloxyethan-2,1-diyl)bisacrylat (Beispiel 2), 0.50 g 2-({[3-(Methylsulfanyl)-phenyl]-carbamoyl}oxy)¬ethylprop-2-enoat (Urethanacrylat 2), 1.50 g 2,2,3,3,4,4,5,5,6,6,7,7,-8,8,9,9-Hexadecafluornonyl-butylcarbamat (fluoriertes Urethan 1), 0.10 g CGI 909 (Versuchsprodukt der Fa. Ciba Inc, Basel, Schweiz), 0.01 g Neu Methylenblau und 0.35 g N-Ethylpyrrolidon bei 60 °C gemischt, so dass eine klare Lösung erhalten wurde. Anschließend wurde auf 30 °C abgekühlt, 0.63 g Desmodur N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23,5 %) zugegeben und erneut gemischt. Schließlich wurden 0.006 g Fomrez UL 28 (Urethanisierungskatalysator, Handelsprodukt der Fa. Momentive Performance Chemicals, Wilton, CT, USA) zugegeben und erneut kurz gemischt. Die erhaltene, flüssige Masse wurde dann auf eine Glasplatte gegeben und dort mit einer zweiten Glasplatte abgedeckt, die durch Abstandshalter auf einen Abstand von 20 μm gehalten wurde. Dieser Probenkörper wurde 12 Stunden bei Raumtemperatur liegen gelassen und gehärtet.

Bei den Beispielmedien 2-6 wurden als Matrixbausteine stets die Polyol-Komponente und Desmodur N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) eingesetzt und zwar so, dass das Verhältnis NCO : OH = 1.02 : 1 war und die Gesamtgewichtsprozent sich zu 100 % addieren. Alle Versuche wurden mit 15% 2,2,3,3,4,4,5,5,6,6,7,7,8,8,9,9-Hexadecafluornonyl-butylcarbamat (fluoriertes Urethan 1), 0.1% Neu Methylenblau und 1.0% CGI 909 (Versuchsprodukt der Fa. Ciba Inc, Basel, Schweiz), gelöst in 3.5% N-Ethylpyrrolidon sowie die angegebene Menge einer 10%-igen Lösung von Katalysator 1 in N-Ethylpyrrolidon durchgeführt. Die Gehalte an Beispiel 2 und Urethanacrylat 2 wurden wie in Tabelle 2 beschrieben variiert. Es wird jeweils der maximale Wert in $\Delta n$ berichtet, die verwendeten Dosen liegen zwischen 4 und 64 mJ/cm$^2$ pro Arm.

**Vergleichsmedium I:**

3.40 g der wie oben beschrieben hergestellten Polyol-Komponente wurden mit 4.00 g Phosphorothioyltris(oxybenzol-4,1-diylcarbamoyl¬oxyethan-2,1-diyl)trisacrylat (Urethanacrylat 1), 1.50 g 2,2,3,3,4,4,5,5,6,6,7,7,8,8,9,9-Hexadecafluornonyl-butylcarbamat (fluoriertes Urethan 1), 0.10 g CGI 909 (Versuchsprodukt der Fa. Ciba Inc, Basel, Schweiz), 0.01 g Neu Methylenblau und 0.35 g N-Ethylpyrrolidon bei 60 °C gemischt, so dass eine klare Lösung erhalten wurde. Anschließend wurde auf 30 °C abgekühlt, 0.64 g Desmodur N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23,5 %) zugegeben und erneut gemischt. Schließlich wurden 0.006 g Fomrez UL 28 (Urethanisierungskatalysator, Handelsprodukt der Fa. Momentive Performance Chemicals, Wilton, CT, USA) zugegeben und erneut kurz gemischt. Die erhaltene, flüssige Masse wurde dann auf eine Glasplatte gegeben und dort mit einer zweiten Glasplatte abgedeckt, die durch Abstandshalter auf einen Abstand von 20 μm gehalten wurde. Dieser Probenkörper wurde 12 Stunden bei Raumtemperatur liegen gelassen und gehärtet.

Bei den Vergleichsmedien II-VIII wurden als Matrixbausteine stets die Polyol-Komponente und Desmodur N3900 (Handelsprodukt der Bayer MaterialScience AG, Leverkusen, DE, Hexandiisocyanat-basiertes Polyisocyanat, Anteil an Iminooxadiazindion mindestens 30 %, NCO-Gehalt: 23.5 %) eingesetzt und zwar so, dass das Verhältnis NCO : OH = 1.02 : 1 war und die Gesamtgewichtsprozent sich zu 100 % addieren. Alle Versuche wurden mit 15% 2,2,3,3,4,4,5,5,6,6,7,7,8,8,9,9-Hexadecafluornonyl-butylcarbamat (fluoriertes Urethan 1), 0.1% Neu Methylenblau und

1.0% CGI 909 (Versuchsprodukt der Fa. Ciba Inc, Basel, Schweiz), gelöst in 3.5% N-Ethylpyrrolidon sowie die angegebene Menge einer 10%-igen Lösung von Katalysator 1 in N-Ethylpyrrolidon durchgeführt. Die Gehalte an Urethanacrylat 1 und Urethanacrylat 2 wurden wie in Tabelle 2 beschrieben variiert. Es wird jeweils der maximale Wert in Δn berichtet, die verwendeten Dosen liegen zwischen 4 und 64 mJ/cm$^2$ pro Arm.

**Tabelle 2:** Beispielmedien zur Variation der Doppelbindungsdichte durch Variation des Gehaltes von Beispiel 2 zu Urethanacrylat 2

| Medium | Beispiel 2 (Gew.-%) | Urethanacrylat 2 (Gew.-%) | Doppelbindungsdichte (val/kg) | Δn | Peak shift |
|---|---|---|---|---|---|
| 1 | 35.0 | 5.0 | 0.986 | 0.0210 | 2.900 |
| 2 | 30.0 | 10.0 | 1.048 | 0.0260 | 3.000 |
| 3 | 20.0 | 20.0 | 1.172 | 0.0300 | 3.500 |
| 4 | 15.0 | 25.0 | 1.234 | 0.0303 | 3.900 |
| 5 | 10.0 | 30.0 | 1.296 | 0.0310 | 4.100 |
| 6 | 5.0 | 35.0 | 1.358 | 0.0323 | 4.400 |

**Tabelle 3:** Vergleichsbeispiele zur Variation der Doppelbindungsdichte durch Variation des Gehaltes von Urethanacrylat 1 zu Urethanacrylat 2

| Vergleichsmedium | Urethanacrylat 1 (Gew.-%) | Urethanacrylat 2 (Gew.-%) | Doppelbindungsdichte (val/kg) | Δn | Peak shift |
|---|---|---|---|---|---|
| I | 40.0 | 0.0 | 1.476 | 0.0200 | 3.000 |
| II | 30.0 | 10.0 | 1.462 | 0.0310 | 3.620 |
| III | 25.0 | 15.0 | 1.455 | 0.0314 | 3.900 |
| IV | 20.0 | 20.0 | 1.448 | 0.0337 | 4.450 |
| V | 15.0 | 25.0 | 1.441 | 0.0342 | 4.500 |
| VI | 10.0 | 30.0 | 1.434 | 0.0354 | 4.450 |
| VII | 5.0 | 35.0 | 1.427 | 0.0367 | 4.700 |
| VIII | 0.0 | 40.0 | 1.420 | 0.0400 | 4.900 |

In Figur 3 ist die Abhängigkeit des Peakshifts von der Gesamtkomposition, wie sie in Tabelle 2 (Beispiele 1-6) und Tabelle 3 (Beispiele I-VIII) wiedergegeben ist, gezeigt. Durch die Verwendung von Beispiel 2 kann der Peakshift im optischen Gitter gegenüber der Verwendung von Urethanacrylat 1 deutlich reduziert werden. Dies wird besonders deutlich, wenn wie in Medium 3 und im Vergleichsmedium IV jeweils 20 Gew.-% des Beispiels 2 bzw. 20 Gew.-% des Urethanacrylats 1 mit jeweils 20 Gew.% des monofunktionellen Urethanacrylats 2 verwendet werden. Bei ähnlich hellen Hologrammen (Δn (Medium 3) = 0.0300 vs. Δn (Vergleichsmedium IV) = 0.0330) wird in Medium 3 ein deutlich reduzierter Peakshift von 3.500° gegenüber 4.450° im Vergleichsmedium IV beobachtet. Damit wird gezeigt, dass die erfindungsgemäßen Urethanacrylate bei der Verwendung in Photopolymer-Formulierungen das Schreiben von Hologrammen mit erhöhter Winkeltreue und Farbtreue ermöglichen.

## Patentansprüche

**1.** Urethanacrylat der Formel (I)

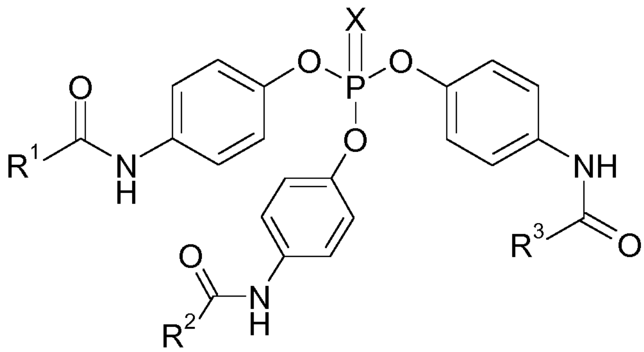

(I)

in der X Sauerstoff oder Schwefel ist und $R^1$, $R^2$, $R^3$ unabhängig voneinander jeweils ein olefinisch ungesättigter organischer Rest oder ein aliphatischer Alkohol sind, wobei wenigstens einer der Reste $R^1$, $R^2$, $R^3$ ein olefinisch ungesättigter organischer Rest und wenigstens einer der Reste $R^1$, $R^2$, $R^3$ ein aliphatischer Alkohol ist, **dadurch gekennzeichnet, dass** die aliphatischen Alkohole Trifluorethanol und/oder 1,1,1,3,3,3-Hexafluorpropan-2-ol sind.

**2.** Urethanacrylate nach Anspruch 1 , **dadurch gekennzeichnet, dass** der oder die olefinisch ungesättigten organischen Reste Acrylat- oder Methacrylat-Strukturen aufweisen.

**3.** Urethanacrylat nach einem der Ansprüche 1 bis 2, **dadurch gekennzeichnet, dass** der oder die olefinisch ungesättigten organischen Reste mit einem oder mehreren Heteroatomen substituiert sind.

**4.** Photopolymer-Formulierung umfassend Matrixpolymere, Schreibmonomere und Photoinitiatoren, **dadurch gekennzeichnet, dass** die Schreibmonomere ein Urethanacrylat nach einem der Ansprüche 1 bis 3 beinhalten.

**5.** Photopolymer-Formulierung nach Anspruch 4, **dadurch gekennzeichnet, dass** die Matrixpolymere Polyurethane sind.

**6.** Photopolymer-Formulierung nach einem der Ansprüche 4 oder 5, **dadurch gekennzeichnet, dass** die Photoinitiatoren einen anionischen, kationischen oder neutralen Farbstoff und einen Coinitiator umfassen.

**7.** Photopolymer-Formulierung nach einem der Ansprüche 4 bis 6, **dadurch gekennzeichnet, dass** sie zusätzlich Urethane als Weichmacher enthält, wobei die Urethane insbesondere mit wenigstens einem Fluoratom substituiert sein können.

**8.** Photopolymer-Formulierung nach Anspruch 7, **dadurch gekennzeichnet, dass** die Urethane die allgemeine Formel (III)

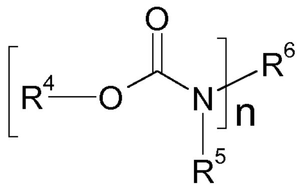

(III)

haben, in der n≥1 und n≤8 ist und $R^4$, $R^5$, $R^6$ Wasserstoff und / oder unabhängig voneinander lineare, verzweigte, cyclische oder heterocyclische unsubstituierte oder gegebenenfalls auch mit Heteroatomen substituierte organische Reste sind, wobei bevorzugt mindestens einer der Reste $R^4$, $R^5$, $R^6$ mit wenigstens einem Fluoratom substituiert ist und besonders bevorzugt $R^4$ ein organischer Rest mit mindestens einem Fluoratom ist.

**9.** Photopolymer-Formulierung nach einem der Ansprüche 4 bis 8, **dadurch gekennzeichnet, dass** die Schreibmonomere zusätzlich ein monofunktionales Schreibmonomer umfassen, wobei es sich insbesondere um ein monofunktionelles Acrylat weiterhin bevorzugt um ein monofunktionelles Urethanacrylat handeln kann.

**10.** Photopolymer-Formulierung nach Anspruch 9, **dadurch gekennzeichnet, dass** das monofunktionelle Acrylat die

allgemeine Formel (IV)

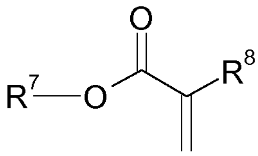

(IV)

hat, in der $R^7$, $R^8$ Wasserstoff und / oder unabhängig voneinander lineare, verzweigte, cyclische oder heterocyclische unsubstituierte oder gegebenenfalls auch mit Heteroatomen substituierte organische Reste sind.

**11.** Verwendung einer Photopolymer-Formulierung nach einem der Ansprüche 4 bis 10 zur Herstellung holographischer Medien, insbesondere zur Herstellung von In-Line Hologrammen, Off-Axis Hologrammen, Full-Aperture Transfer Hologrammen, Weißlicht-Transmissionshologrammen, Denisyukhologrammen, Off-Axis Reflektionshologrammen, Edge-Lit Hologrammen sowie holographischen Stereogrammen.

## Claims

**1.** Urethane acrylate of the formula (I)

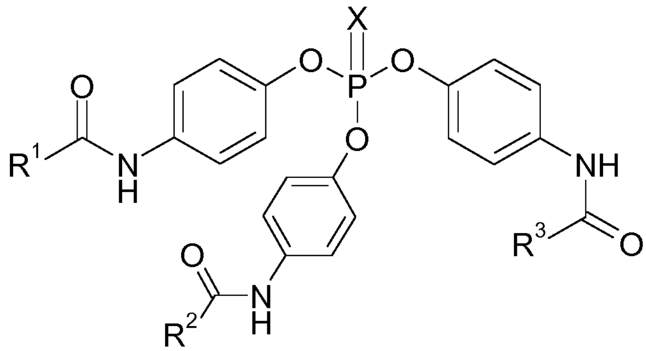

(I)

in which X is oxygen or sulphur, and $R^1$, $R^2$, $R^3$, independently of one another, are each an olefinically unsaturated organic radical or an aliphatic alcohol, at least one of the radicals $R^1$, $R^2$, $R^3$ being an olefinically unsaturated organic radical and at least one of the radicals $R^1$, $R^2$, $R^3$ being an aliphatic alcohol, **characterized in that** the aliphatic alcohols are trifluoroethanol and/or 1,1,1,3,3,3-hexafluoropropan-2-ol.

**2.** Urethane acrylate according to Claim 1, **characterized in that** the olefinically unsaturated organic radical or radicals has or have acrylate or methacrylate structures.

**3.** Urethane acrylate according to either of Claims 1 and 2, **characterized in that** the olefinically unsaturated organic radical or radicals is or are substituted by one or more heteroatoms.

**4.** Photopolymer formulation comprising matrix polymers, writing monomers and photoinitiators, **characterized in that** the writing monomers comprise a urethane acrylate according to any of Claims 1 to 3.

**5.** Photopolymer formluation according to Claim 4, **characterized in that** the matrix polymers are polyurethanes.

**6.** Photopolymer formulation according to either of Claims 4 and 5, **characterized in that** the photoinitiators comprise an anionic, cationic or neutral dye and a coinitiator.

**7.** Photopolymer formulation according to any of Claims 4 to 6, **characterized in that** it additionally contains urethanes as plasticizers, it being possible for the urethanes to be substituted in particular by at least one fluorine atom.

**8.** Photopolymer formulation according to Claim 7, **characterized in that** the urethanes have the general formula (III)

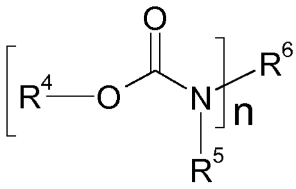

(III)

in which n≥1 and n≤8 and $R^4$, $R^5$, $R^6$ are hydrogen and/or, independently of one another, linear, branched, cyclic or heterocyclic organic radicals which are unsubstituted or optionally also substituted by heteroatoms, preferably at least one of the radicals $R^4$, $R^5$, $R^6$ being substituted by at least one fluorine atom and particularly preferably $R^4$ being an organic radical having at least one fluorine atom.

**9.** Photopolymer formulation according to any of Claims 4 to 8, **characterized in that** the writing monomers additionally comprise a monofunctional writing monomer, it being possible for this to be in particular a monofunctional acrylate, more preferably a monofunctional urethane acrylate.

**10.** Photopolymer formulation according to Claim 9, **characterized in that** the monofunctional acrylate has the general formula (IV)

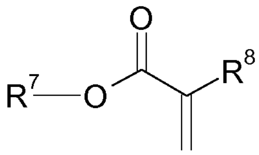

(IV)

in which $R^7$, $R^8$ are hydrogen and/or, independently of one another, linear, branched, cyclic or heterocyclic organic radicals which are unsubstituted or optionally also substituted by heteroatoms.

**11.** Use of a photopolymer formulation according to any of Claims 4 to 10 for the production of holographic media, in particular for the production of in-line holograms, off-axis holograms, full aperture transfer holograms, white light transmission holograms, Denisyuk holograms, off-axis reflection holograms, edge-lit holograms and holographic stereograms.

## Revendications

**1.** Acrylate d'uréthane de formule (I)

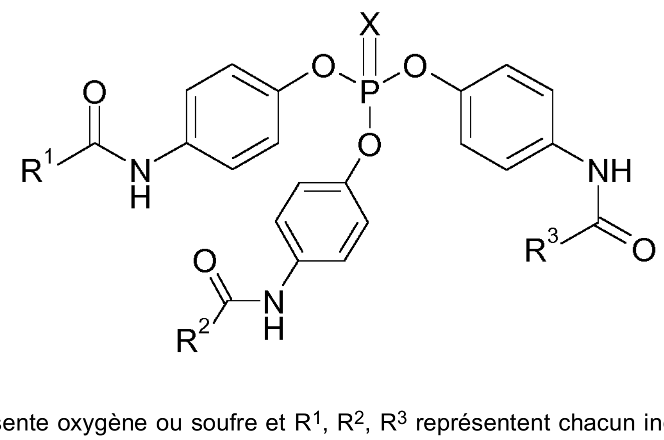

(I)

dans laquelle X représente oxygène ou soufre et $R^1$, $R^2$, $R^3$ représentent chacun indépendamment les uns des autres un radical organique oléfiniquement insaturé ou un alcool aliphatique, au moins un des radicaux $R^1$, $R^2$, $R^3$ étant un radical organique oléfiniquement insaturé et au moins un des radicaux $R^1$, $R^2$, $R^3$ étant un alcool aliphatique, **caractérisé en ce que** les alcools aliphatiques sont le trifluoroéthanol et/ou le 1,1,1,3,3,3-hexafluoropropane-2-ol.

**2.** Acrylates d'uréthane selon la revendication 1, **caractérisés en ce que** le ou les radicaux organiques oléfiniquement insaturés présentent des structures acrylate ou méthacrylate.

**3.** Acrylate d'uréthane selon l'une quelconque des revendications 1 à 2, **caractérisé en ce que** le ou les radicaux organiques oléfiniquement insaturés sont substitués avec un ou plusieurs hétéroatomes.

**4.** Formulation de photopolymère comprenant des polymères de matrice, des monomères d'écriture et des photoinitiateurs, **caractérisée en ce que** les monomères d'écriture contiennent un acrylate d'uréthane selon l'une quelconque des revendications 1 à 3.

**5.** Formulation de photopolymère selon la revendication 4, **caractérisée en ce que** les polymères de matrice sont des polyuréthanes.

**6.** Formulation de photopolymère selon l'une quelconque des revendications 4 ou 5, **caractérisée en ce que** les photoinitiateurs comprennent un colorant anionique, cationique ou neutre et un co-initiateur.

**7.** Formulation de photopolymère selon l'une quelconque des revendications 4 à 6, **caractérisée en ce qu'**elle contient en outre des uréthanes en tant que plastifiant, les uréthanes pouvant notamment être substitués avec au moins un atome de fluor.

**8.** Formulation de photopolymère selon la revendication 7, **caractérisée en ce que** les uréthanes présentent la formule générale (III)

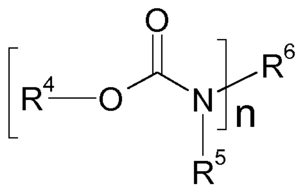

(III)

dans laquelle $n \geq 1$ et $n \leq 8$, et $R^4$, $R^5$, $R^6$ représentent l'hydrogène et/ou indépendamment les uns des autres des radicaux organiques linéaires, ramifiés, cycliques ou hétérocycliques non substitués ou éventuellement également substitués avec des hétéroatomes, au moins un des radicaux $R^4$, $R^5$, $R^6$ étant de préférence substitué avec au moins un atome de fluor, et $R^4$ étant de manière particulièrement préférée un radical organique contenant au moins un atome de fluor.

**9.** Formulation de photopolymère selon l'une quelconque des revendications 4 à 8, **caractérisée en ce que** les monomères d'écriture comprennent en outre un monomère d'écriture monofonctionnel, qui peut notamment être un acrylate monofonctionnel, de manière davantage préférée un acrylate d'uréthane monofonctionnel.

**10.** Formulation de photopolymère selon la revendication 9, **caractérisée en ce que** l'acrylate monofonctionnel présente la formule générale (IV)

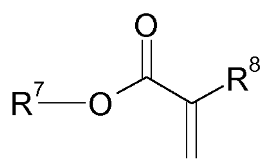

(IV)

dans laquelle $R^7$, $R^8$ représentent l'hydrogène et/ou indépendamment l'un de l'autre des radicaux organiques linéaires, ramifiés, cycliques ou hétérocycliques non substitués ou éventuellement également substitués avec des hétéroatomes.

**11.** Utilisation d'une formulation de photopolymère selon l'une quelconque des revendications 4 à 10 pour la fabrication de matériaux holographiques, notamment pour la fabrication d'hologrammes en ligne, d'hologrammes désaxés, d'hologrammes de transfert à ouverture totale, d'hologrammes à transmission de lumière blanche, d'hologramme

de Denisyuk, d'hologrammes à réflexion désaxés, d'hologrammes à bords éclairés et de stéréogrammes holographiques.

**Fig. 1**

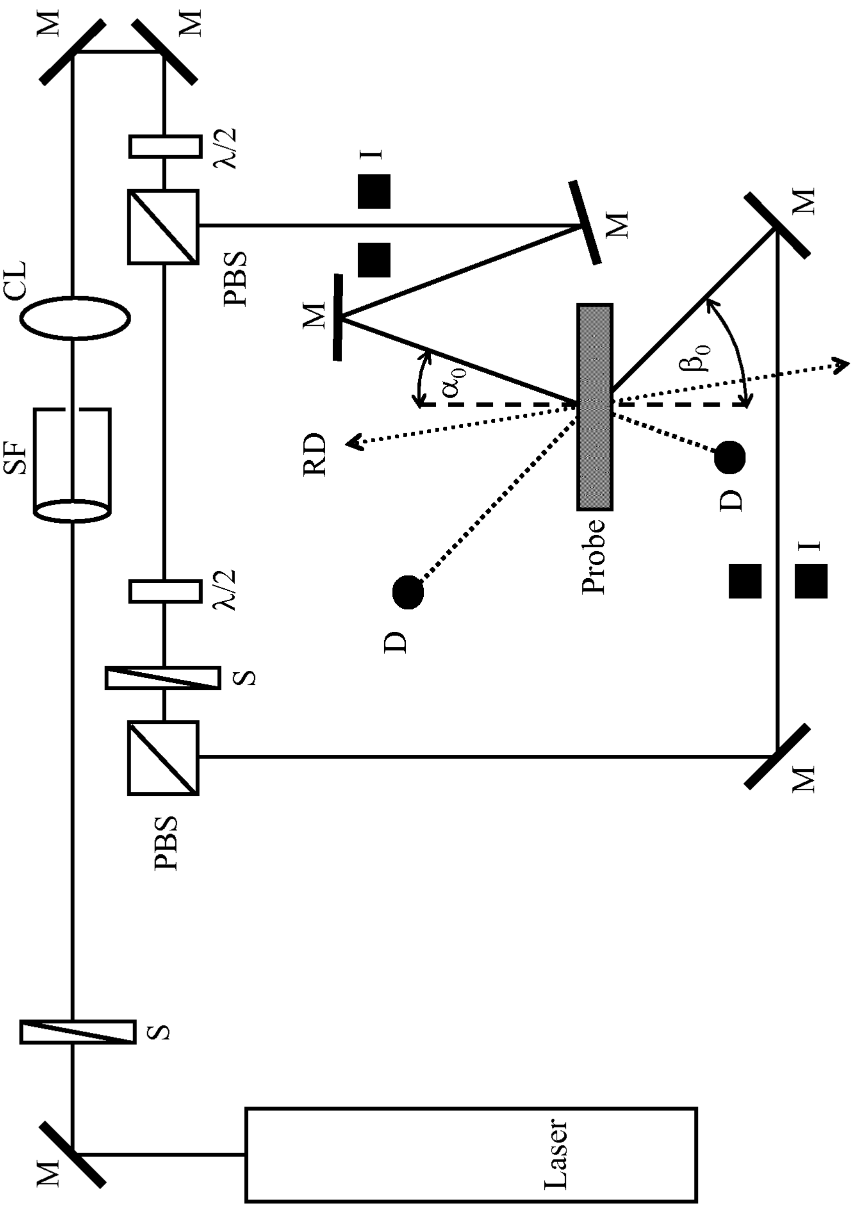

Fig. 2

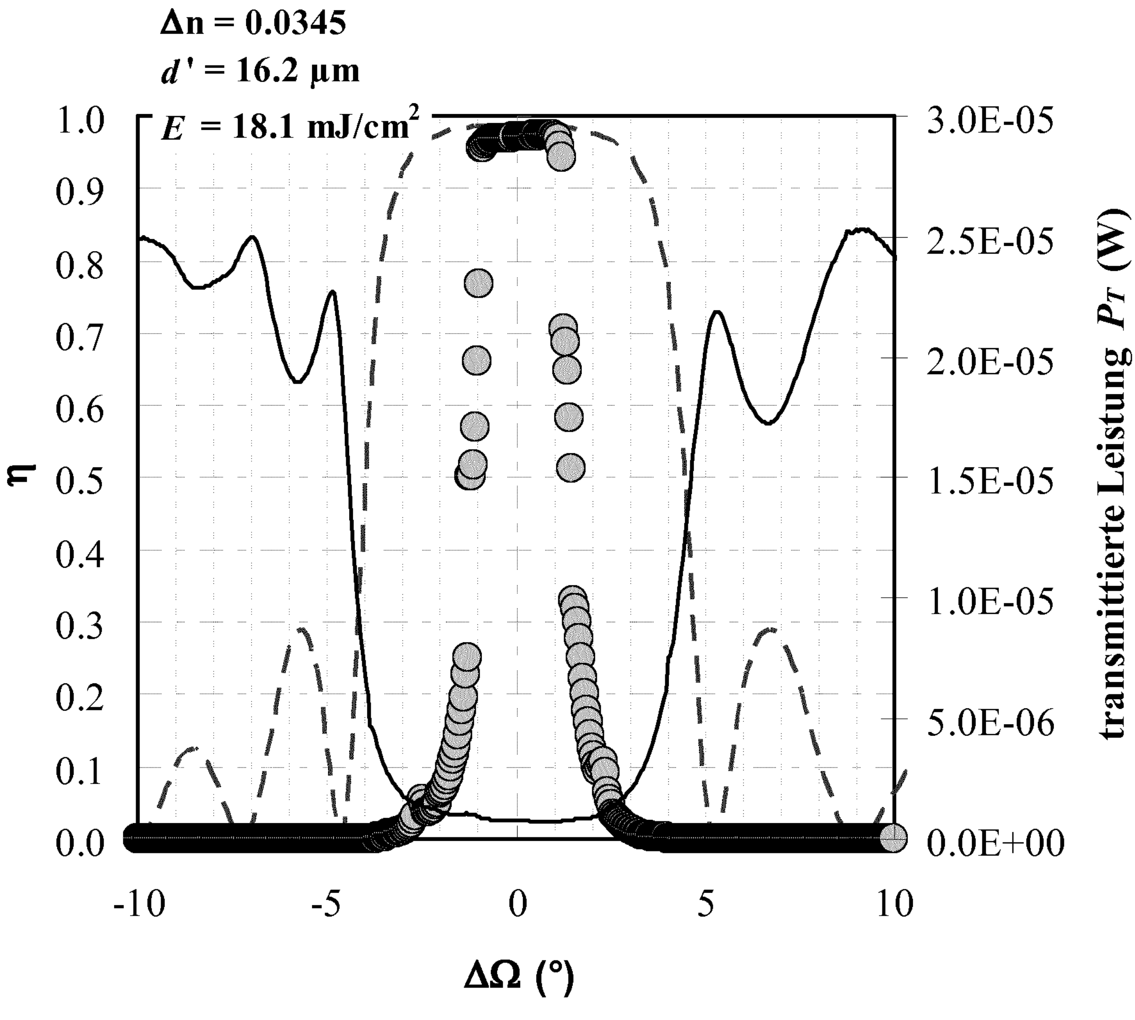
Δn = 0.0345
d' = 16.2 µm
E = 18.1 mJ/cm²
η
1.0
0.9
0.8
0.7
0.6
0.5
0.4
0.3
0.2
0.1
0.0
3.0E-05
2.5E-05
2.0E-05
1.5E-05
1.0E-05
5.0E-06
0.0E+00
transmittierte Leistung PT (W)
-10
-5
0
5
10
ΔΩ (°)

**Fig. 3**

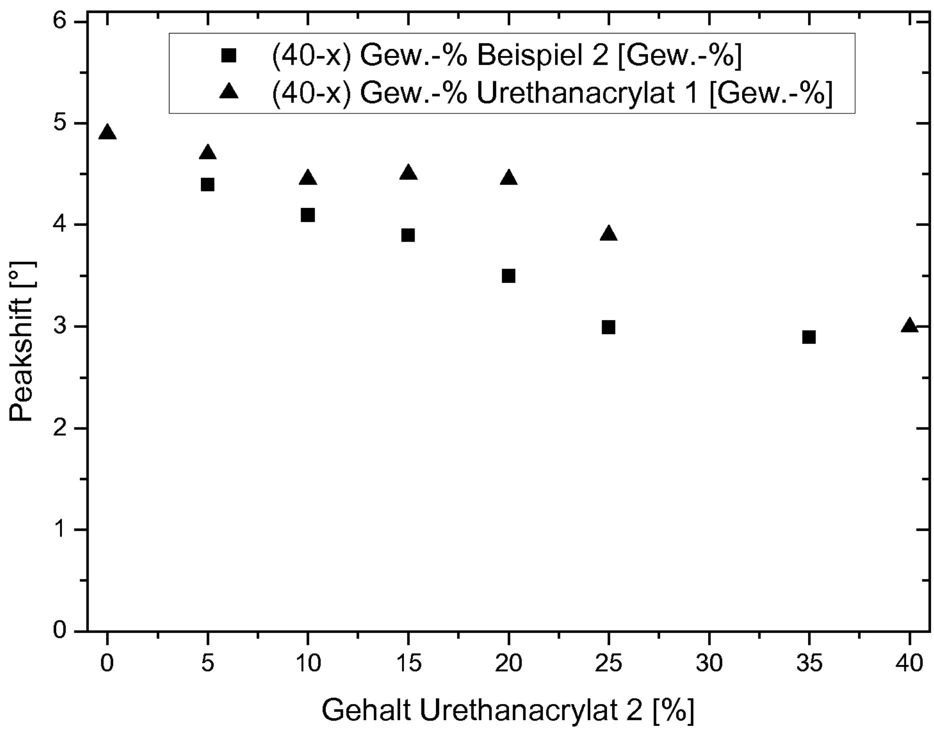
(40-x) Gew.-% Beispiel 2 [Gew.-%]
(40-x) Gew.-% Urethanacrylat 1 [Gew.-%]
Peakshift [°]
0
1
2
3
4
5
6
0
5
10
15
20
25
30
35
40
Gehalt Urethanacrylat 2 [%]

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008125229 A1
- WO 2008125199 A1
- EP 0223587 A


### In der Beschreibung aufgeführte Nicht-Patentliteratur


- **CUNNINGHAM et al.** *RadTech'98 North America UV/EB Conference Proceedings,* 19. April 1998
- **KUTAL et al.** *Macromolecules,* 1991, vol. 24, 6872
- **YAMAGUCHI et al.** *Macromolecules,* 2000, vol. 33, 1152
- **NECKERS et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **CRIVELLO et al.** *Macromolecules,* 2000, vol. 33, 825
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings. Inks & Paints. SITA Technology, 1991, vol. 3, 61-328
- **H. KOGELNIK.** *The Bell System Technical Journal,* November 1969, vol. 48 (9), 2909, , 2947